(19) Europäisches Patentamt
European Patent Office
Office européen des brevets

(11) EP 3 579 013 A1

(12) EUROPEAN PATENT APPLICATION

(43) Date of publication:
11.12.2019 Bulletin 2019/50

(51) Int Cl.:
G01S 7/41 (2006.01)    G01S 13/93 (2006.01)
G01S 13/86 (2006.01)

(21) Application number: 18190802.1

(22) Date of filing: 24.08.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 08.06.2018 IN 201821021619

(71) Applicant: KPIT Technologies Ltd.
Pune, Maharashtra 411057 (IN)

(72) Inventors:
• BHATTACHARJEE, Sudipta
411057 Maharashtra (IN)
• P, Arumugam
411057 Maharashtra (IN)
• KUMAR, Kishan
411057 Maharashtra (IN)
• VORA, Prashantkumar Bipinchandra
411057 Maharashtra (IN)

(74) Representative: Rees, Kerry
WP Thompson
138 Fetter Lane
London EC4A 1BT (GB)

(54) **SYSTEM AND METHOD FOR DETECTING A VEHICLE IN NIGHT TIME**

(57) An embodiment disclosed herein pertains to a system implemented in a host vehicle comprising a processing unit to receive radar data, pertaining to a target vehicle, detected by a radar sensor; map the received radar data in an image received from an image sensor to obtain a radar map point in said image, wherein the radar map point is obtained by compensating an offset error pertaining to height of the target vehicle; detect position of the target vehicle, in the image received from the imaging sensor, by processing said received image; determine an association between the radar map point and detected position of the target vehicle in the image by detecting a search region in the image; and confirm the obtained radar map point as the position of the target vehicle in the image based on computation of a threshold value.

FIG. 1

EP 3 579 013 A1

**Description**

**TECHNICAL FIELD**

The present disclosure relates to the field of vehicle automation. More particularly, the present disclosure relates to a system and method for detection of a vehicle in night time.

**BACKGROUND**

There has been a continuous growth in the field of vehicle automation. A robust and reliable vehicle detection system is one of the key elements in vehicle automation, which makes accurate and precise vehicle detection a subject of prime importance. Due to change in visibility of vehicles on the road owing to various conditions such as weather, glare, pollution or inherent human weakness many detection systems and devices utilizing different techniques have been developed. Many existing techniques operable to detect vehicles or other objects in vicinity of a host vehicle are based on sensors such as Radio Detection and Ranging (RADAR), Light Detection and Ranging (LIDAR), ultrasound, camera and the like incorporated in the host vehicle.

Certain exiting techniques are based on computer vision based approaches, however, these techniques may fail to detect the presence of a vehicle if visibility of the vehicle is poor, for example, a computer vision based detection system may not detect a black car during night time. Further, certain exiting techniques are based on radar data which is useful for detecting and measuring distance of target vehicle. The major challenge is, detecting and measuring target vehicle distance under cruise to stop mode, where only brake light of the target vehicle is visible. It is very difficult to get target vehicle edges, particularly black colored vehicle at far region. Further, these techniques suffer from false detection, which leads to lower efficiency in detection in terms of accuracy and places reliability of such system under scrutiny.

Certain other existing techniques utilize statistical methodologies to statistically analyse data obtained from various sensors implemented in the host vehicle to estimate whether a vehicle is detected by the host vehicle. Such techniques typically use statistical methodologies to determine likelihood or probability that a detected object is a vehicle. However, such techniques also lead to generation of false positive detections and thereby reduce efficiency. As existing techniques face above-mentioned and other disadvantages, they may hinder in development of efficient Auto Emergency Braking (AEB) and/or Autonomous Cruise Control (ACC) systems that are other key elements of vehicle automation.

There is therefore need in the art to develop a system and method for detection of vehicles especially during night time that overcomes the above-mentioned and other limitations of the existing solutions and utilize techniques, which are robust, accurate, fast, efficient and simple.

**OBJECTS OF THE PRESENT DISCLOSURE**

Some of the objects of the present disclosure, which at least one embodiment herein satisfies are as listed herein below.

It is an object of the present disclosure to provide a system and method for detection of a vehicle in night time when visibility of target vehicle is very poor.

Another object of the present disclosureis to provide a system and method for detection of a vehicle in night time that has an increased vehicle detection range.

Yet another object of the present disclosureis to provide a system and method for detection of a vehicle in night time that eliminates false detections determined from radar data.

Another object of the present disclosureis to provide a system and method for detection of a vehicle in night time that has a faster computational time.

Another object of the present disclosureis to provide a system and method for detection of a vehicle in night time that detects vehicles of varied speeds.

Another object of the present disclosureis to provide a system and method that may handle detection and confirmation of multiple vehicles in a single image received from the image sensor.

**SUMMARY**

The present disclosure relates to the field of vehicle automation. More particularly, the present disclosure relates to a system and method for detection of a vehicle in night time.

According to an aspect of the present disclosure, a system implemented in a host vehicle for detecting a target vehicle in night time comprises: an input unit comprising an image sensor for imaging field of view of the host vehicle and a radar sensor operable to detect the target vehicle ahead of the host vehicle; and a processing unit comprising a processor coupled with a memory, the memory storing instructions executable by the processor to: receive radar data, pertaining to the target vehicle, detected by the radar sensor, wherein the radar data comprises at least a lateral distance and a longitudinal distance of the target vehicle from the host vehicle; map the received radar data in an image received from the image sensor to obtain a radar map point in said image, wherein the radar map point is obtained by compensating an offset error pertaining to height of the target vehicle, said offset error being determined based on at least the longitudinal distance of the target vehicle from the host vehicle; detect position of the target vehicle, in the image received from the imaging sensor, by processing said received image; determine an association between the radar map point and detected position of the target vehicle in the image by detecting a search region in the image, said search region being detected based on at least the longitudinal distance of the target vehicle from the host vehicle; and confirm the obtained radar map point as the position of the target vehicle in the image based on computation of a threshold value, said threshold value being determined using the detected search region.

In an embodiment, the processing of the image received from the imaging sensor, comprises: converting the received image in a pre-processed image, wherein the pre-processed image is in YUV format; extracting a red channel, by filtering V component from the pre-processed image, to obtain a filtered image; and converting said filtered image into a binary image to detect position of the target.

In an embodiment, the processor indicates the radar data as a false positive in an event when the radar map point is not confirmed as the position of the target vehicle in the image.

In an embodiment, on mapping the received radar data in the image to obtain the radar map point, the radar data corresponding to the target vehicle is filtered such that a single point is obtained based on an association between a plurality of points pertaining to the target vehicle, said plurality of points being obtained using the radar data.

In an embodiment, the received radar data is mapped in the image by obtaining two-dimensional co-ordinates in said image based on at least the lateral distance and the longitudinal distance of the target vehicle from the host vehicle.

In an embodiment, the processing unit is operatively coupled with an output unit configured to provide an audio-visual warning to a driver of the host vehicle in an event of confirmation of the radar map point as the position of the target vehicle.

In an embodiment, the search region pertains to number of pixels, in the image, to be searched in proximity of the radar map point.

In an embodiment, in order to confirm the obtained radar map point as the position of the target vehicle in the image, number of bright pixels around the radar map point is analyzed.

In an embodiment, the obtained radar map point is confirmed as the position of the target vehicle in the image when number of bright pixels around the radar map point is greater than the threshold value, said threshold value being completely dynamic and adaptive in nature.

Another aspect of the present disclosure pertains to a method, carried out according to instructions stored in a computer implemented in a host vehicle, comprising: receiving radar data from a radar sensor operatively coupled with the host vehicle, said radar sensor operable to detect a target vehicle ahead of the host vehicle, wherein the radar data comprises at least a lateral distance and a longitudinal distance of the target vehicle from the host vehicle; mapping the received radar data in an image received from an image sensor operatively coupled with the host vehicle, to obtain a radar map point in said image, wherein the radar map point is obtained by compensating an offset error pertaining to height of the target vehicle, said offset error being determined based on at least the longitudinal distance of the target vehicle from the host vehicle; detecting position of the target vehicle, in the image received from the imaging sensor, by processing said received image; determining an association between the radar map point and detected position of the target vehicle in the image by detecting a search region in the image, said search region being detected based on at least the longitudinal distance of the target vehicle from the host vehicle; and confirming the obtained radar map point as the position of the target vehicle in the image based on computation of a threshold value, said threshold value being determined using the detected search region.

Various objects, features, aspects and advantages of the present disclosure will become more apparent from the following detailed description of preferred embodiments, along with the accompanying drawing figures in which like numerals represent like features.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

**BRIEF DESCRIPTION OF DRAWINGS**

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure, and wherein:

FIG. 1 illustrates exemplary architecture of a system to illustrate its overall working in accordance with an embodiment of the present disclosure.

FIG. 2 illustrates exemplary modules of a processing unit in accordance with an embodiment of the present disclosure.

FIGs. 3A-F illustrates exemplary images for detection of a target vehicle in accordance with an embodiment of the present disclosure.

FIG. 4 illustrates an exemplary representation of determination of a search region in accordance with an embodiment of the present disclosure.

FIG. 5A-B illustrates exemplary experimental results obtained in accordance with an embodiment of the present disclosure.

FIG. 6 illustrates an exemplary method for detection of vehicle in night time in accordance with an embodiment of the present disclosure.

## DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

In the following description, numerous specific details are set forth in order to provide a thorough understanding of embodiments of the present invention. It will be apparent to one skilled in the art that embodiments of the present invention may be practiced without some of these specific details.

Embodiments of the present invention include various steps, which will be described below. The steps may be performed by hardware components or may be embodied in machine-executable instructions, which may be used to cause a general-purpose or special-purpose processor programmed with the instructions to perform the steps. Alternatively, steps may be performed by a combination of hardware, software, and firmware and/or by human operators.

Various methods described herein may be practiced by combining one or more machine-readable storage media containing the code according to the present invention with appropriate standard computer hardware to execute the code contained therein. An apparatus for practicing various embodiments of the present invention may involve one or more computers (or one or more processors within a single computer) and storage systems containing or having network access to computer program(s) coded in accordance with various methods described herein, and the method steps of the invention could be accomplished by modules, routines, subroutines, or subparts of a computer program product.

If the specification states a component or feature "may", "can", "could", or "might" be included or have a characteristic, that particular component or feature is not required to be included or have the characteristic.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

Exemplary embodiments will now be described more fully hereinafter with reference to the accompanying drawings, in which exemplary embodiments are shown. These exemplary embodiments are provided only for illustrative purposes and so that this disclosure will be thorough and complete and will fully convey the scope of the invention to those of ordinary skill in the art. The invention disclosed may, however, be embodied in many different forms and should not be construed as limited to the embodiments set forth herein. Various modifications will be readily apparent to persons skilled in the art. The general principles defined herein may be applied to other embodiments and applications without departing from the spirit and scope of the invention. Moreover, all statements herein reciting embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure). Also, the terminology and phraseology used is for the purpose of describing exemplary embodiments and should not be considered limiting. Thus, the present invention is to be accorded the widest scope encompassing numerous alternatives, modifications and equivalents consistent with the principles and features disclosed. For purpose of clarity, details relating to technical material that is known in the technical fields related to the invention have not been described in detail so as not to unnecessarily obscure the present invention.

Thus, for example, it will be appreciated by those of ordinary skill in the art that the diagrams, schematics, illustrations, and the like represent conceptual views or processes illustrating systems and methods embodying this invention. The functions of the various elements shown in the figures may be provided through the use of dedicated hardware as well as hardware capable of executing associated software. Similarly, any switches shown in the figures are conceptual only. Their function may be carried out through the operation of program logic, through dedicated logic, through the interaction of program control and dedicated logic, or even manually, the particular technique being selectable by the entity implementing this invention. Those of ordinary skill in the art further understand that the exemplary hardware, software, processes, methods, and/or operating systems described herein are for illustrative purposes and, thus, are not intended to be limited to any particular named element.

Embodiments of the present invention may be provided as a computer program product, which may include a machine-readable storage medium tangibly embodying thereon instructions, which may be used to program a computer (or other electronic devices) to perform a process. The term "machine-readable storage medium" or "computer-readable storage medium" includes, but is not limited to, fixed (hard) drives, magnetic tape, floppy diskettes, optical disks, compact disc read-only memories (CD-ROMs), and magneto-optical disks, semiconductor memories, such as ROMs, PROMs, random access memories (RAMs), programmable read-only memories (PROMs), erasable PROMs (EPROMs), electrically erasable PROMs (EEPROMs), flash memory, magnetic or optical cards, or other type of media/machine-readable medium suitable for storing electronic instructions (e.g., computer programming code, such as software or firmware).A machine-readable medium may include a non-transitory medium in which data may be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-program product may include code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

Furthermore, embodiments may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a machine-readable medium. A processor(s) may perform the necessary tasks.

Systems depicted in some of the figures may be provided in various configurations. In some embodiments, the systems may be configured as a distributed system where one or more components of the system are distributed across one or more networks in a cloud computing system.

Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims.

All methods described herein may be performed in any suitable order unless otherwise indicated herein or otherwise clearly contradicted by context. The use of any and all examples, or exemplary language (e.g., "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

Various terms as used herein are shown below. To the extent a term used in a claim is not defined below, it should be given the broadest definition persons in the pertinent art have given that term as reflected in printed publications and issued patents at the time of filing.

The present disclosure relates to the field of vehicle automation. More particularly, the present disclosure relates to a system and method for detection of a vehicle in night time.

According to an aspect of the present disclosure, a system implemented in a host vehicle for detecting a target vehicle in night time comprises: an input unit comprising an image sensor for imaging field of view of the host vehicle and a radar sensor operable to detect the target vehicle ahead of the host vehicle; and a processing unit comprising a processor coupled with a memory, the memory storing instructions executable by the processor to: receive radar data, pertaining to the target vehicle, detected by the radar sensor, wherein the radar data comprises at least a lateral distance and a longitudinal distance of the target vehicle from the host vehicle; map the received radar data in an image received from the image sensor to obtain a radar map point in said image, wherein the radar map point is obtained by compensating an offset error pertaining to height of the target vehicle, said offset error being determined based on at least the longitudinal distance of the target vehicle from the host vehicle; detect position of the target vehicle, in the image received from the imaging sensor, by processing said received image; determine an association between the radar map point and detected position of the target vehicle in the image by detecting a search region in the image, said search region being detected based on at least the longitudinal distance of the target vehicle from the host vehicle; and confirm the obtained radar map point as the position of the target vehicle in the image based on computation of a threshold value, said threshold value being determined using the detected search region.

In an embodiment, the processing of the image received from the imaging sensor, comprises: converting the received image in a pre-processed image, wherein the pre-processed image is in YUV format; extracting a red channel,

by filtering V component from the pre-processed image, to obtain a filtered image; and converting said filtered image into a binary image to detect position of the target.

In an embodiment, the processor indicates the radar data as a false positive in an event when the radar map point is not confirmed as the position of the target vehicle in the image.

In an embodiment, on mapping the received radar data in the image to obtain the radar map point, the radar data corresponding to the target vehicle is filtered such that a single point is obtained based on an association between a plurality of points pertaining to the target vehicle, said plurality of points being obtained using the radar data.

In an embodiment, the received radar data is mapped in the image by obtaining two-dimensional co-ordinates in said image based on at least the lateral distance and the longitudinal distance of the target vehicle from the host vehicle.

In an embodiment, the processing unit is operatively coupled with an output unit configured to provide an audio-visual warning to a driver of the host vehicle in an event of confirmation of the radar map point as the position of the target vehicle.

In an embodiment, the search region pertains to number of pixels, in the image, to be searched in proximity of the radar map point.

In an embodiment, in order to confirm the obtained radar map point as the position of the target vehicle in the image, number of bright pixels around the radar map point is analyzed.

In an embodiment, the obtained radar map point is confirmed as the position of the target vehicle in the image when number of bright pixels around the radar map point is greater than the threshold value, said threshold value being completely dynamic and adaptive in nature.

Another aspect of the present disclosure pertains to a method, carried out according to instructions stored in a computer implemented in a host vehicle, comprising: receiving radar data from a radar sensor operatively coupled with the host vehicle, said radar sensor operable to detect a target vehicle ahead of the host vehicle, wherein the radar data comprises at least a lateral distance and a longitudinal distance of the target vehicle from the host vehicle; mapping the received radar data in an image received from an image sensor operatively coupled with the host vehicle, to obtain a radar map point in said image, wherein the radar map point is obtained by compensating an offset error pertaining to height of the target vehicle, said offset error being determined based on at least the longitudinal distance of the target vehicle from the host vehicle; detecting position of the target vehicle, in the image received from the imaging sensor, by processing said received image; determining an association between the radar map point and detected position of the target vehicle in the image by detecting a search region in the image, said search region being detected based on at least the longitudinal distance of the target vehicle from the host vehicle; and confirming the obtained radar map point as the position of the target vehicle in the image based on computation of a threshold value, said threshold value being determined using the detected search region.

Various embodiments of the present disclosure pertain to detection of a target vehicle by a host vehicle in night time. Techniques disclosed herein allow detection of the target vehicle and measurement of its distance from the host vehicle at night time and particularly at far distances where visibility of the target vehicle is very poor.

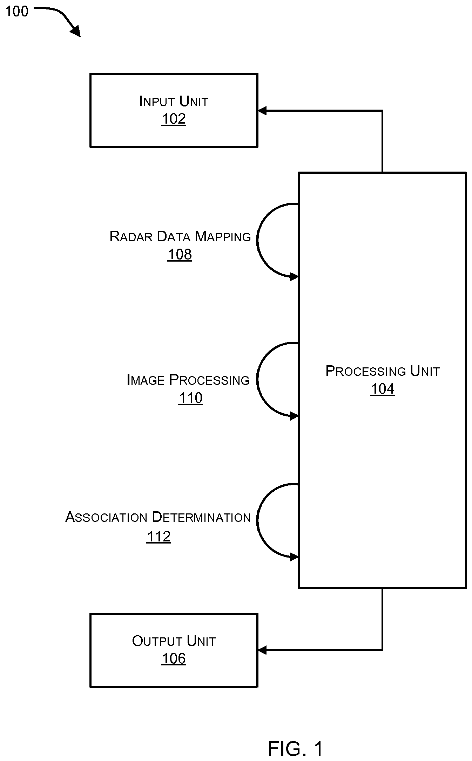

FIG. 1 illustrates exemplary architecture of a system to illustrate its overall working in accordance with an embodiment of the present disclosure.

According to an embodiment, a system 100 implemented in a host vehicle comprises an input unit 102, a processing unit 104 and an output unit 106.The input unit 102 comprises one or more radar sensors to detect a target vehicle ahead of the host vehicle. In an exemplary implementation, radar sensors for short-range or long range detection may be located in front and back of the host vehicle and the target vehicle. Further, the input unit 102 also comprises one or more image sensors or cameras configured in a vehicle to capture images of field of view of the host vehicle. In an implementation, the image sensors or the cameras may be placed in front portion of the host vehicle. The processing unit 104 may comprise a processor and a memory and/or may be integrated with existing systems and controls of a vehicle to form an advanced driver assistance system (ADAS), or augment an existing ADAS. For instance, signals generated by the processing unit 104 may be sent to engine control unit (ECU) of the vehicle. The output unit 106 may be a display device or any other audio-visual device provide an audio and/or visual warning to a driver of the host vehicle when a target vehicle is detected.

According to an aspect, the processing unit 104 receives radar data pertaining to the target vehicle from the radar sensor of the input unit 102. The radar data comprises at least a lateral distance and a longitudinal distance of the target vehicle from the host vehicle. During radar data mapping 108, the processing unit 104 maps the received radar data in an image received from the image sensor of the input unit 102. In an embodiment, the received radar data is mapped in the image by obtaining two-dimensional co-ordinates in said image based on at least the lateral distance and the longitudinal distance of the target vehicle from the host vehicle. Further, the processing unit 104 filters the radar data corresponding to the target vehicle such that a single point is obtained based on an association between a plurality of points pertaining to the target vehicle. The processing unit 104 obtains a radar map point in the image by compensating an offset error pertaining to height of the target vehicle, which is determined based on at least the longitudinal distance of the target vehicle from the host vehicle.

In an embodiment, during image processing 110, the processing unit 104 processes the image received from the imaging sensor of the input unit 102 to detect position of the target vehicle in the received image. The image processing is performed by converting the received image in a pre-processed image that is in YUV format, extracting a red channel by filtering V component from the pre-processed image to obtain a filtered image and converting the filtered image into a binary image to detect position of the target.

During association determination 112, the processing unit 104 determines an association between the radar map point and detected position of the target vehicle in the image by detecting a search region in the image. The search region is detected based on at least the longitudinal distance of the target vehicle from the host vehicle. In an embodiment, the search region pertains to number of pixels in the image that are to be searched in proximity of the radar map point. Further, the processing unit 104 confirms the obtained radar map point as the position of the target vehicle in the image based on computation of a threshold value that is determined using the detected search region. Also, the processing unit 104 indicates the radar data as a false positive when the radar map point is not confirmed as the position of the target vehicle in the image.

In an embodiment, to confirm the obtained radar map point as the position of the target vehicle in the image, the processing unit 104 analyses number of bright pixels around the radar map point. In an embodiment, the obtained radar map point is confirmed as the position of the target vehicle in the image when number of bright pixels around the radar map point is greater than the threshold value that is completely dynamic and adaptive in nature.

In an embodiment, the output unit 106 provides an audio-visual warning to a driver of the host vehicle when the radar map point is confirmed as the position of the target vehicle.

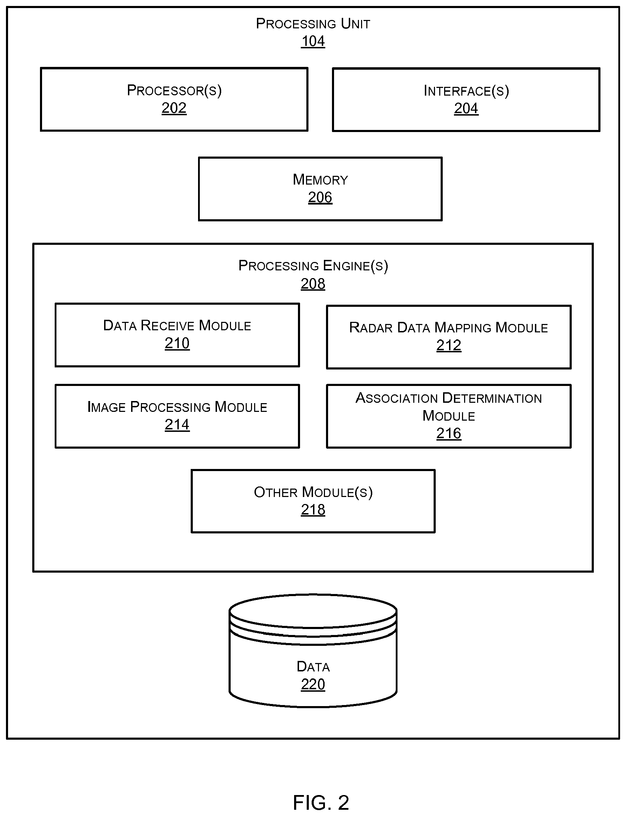

FIG. 2 illustrates exemplary modules of a processing unit in accordance with an embodiment of the present disclosure.

In an aspect, the processing unit 104 may comprise one or more processor(s) 202. The one or more processor(s) 202 may be implemented as one or more microprocessors, microcomputers, microcontrollers, digital signal processors, central processing units, logic circuitries, and/or any devices that manipulate data based on operational instructions. Among other capabilities, the one or more processor(s) 202 are configured to fetch and execute computer-readable instructions stored in a memory 206 of the processing unit 104. The memory 206 may store one or more computer-readable instructions or routines, which may be fetched and executed to create or share the data units over a network service. The memory 206 may comprise any non-transitory storage device including, for example, volatile memory such as RAM, or nonvolatile memory such as EPROM, flash memory, and the like.

The processing unit 104 may also comprise an interface(s) 204. The interface(s) 204 may comprise a variety of interfaces, for example, interfaces for data input and output devices, referred to as I/O devices, storage devices, and the like. The interface(s) 204 may facilitate communication of processing unit 104 with various devices coupled to the processing unit 104 such as the input unit 102 and the output unit 104. The interface(s) 204 may also provide a communication pathway for one or more components of the processing unit 104. Examples of such components include, but are not limited to, processing engine(s) 208 and data 220.

The processing engine(s) 208 may be implemented as a combination of hardware and programming (for example, programmable instructions) to implement one or more functionalities of the processing engine(s) 208. In examples described herein, such combinations of hardware and programming may be implemented in several different ways. For example, the programming for the processing engine(s) 208 may be processor executable instructions stored on a non-transitory machine-readable storage medium and the hardware for the processing engine(s) 208 may comprise a processing resource (for example, one or more processors), to execute such instructions. In the present examples, the machine-readable storage medium may store instructions that, when executed by the processing resource, implement the processing engine(s) 208. In such examples, the processing unit 104 may comprise the machine-readable storage medium storing the instructions and the processing resource to execute the instructions, or the machine-readable storage medium may be separate but accessible to processing unit 104 and the processing resource. In other examples, the processing engine(s) 208 may be implemented by electronic circuitry. The data 220 may comprise data that is either stored or generated as a result of functionalities implemented by any of the components of the processing engine(s) 208.

In an exemplary embodiment, the engine(s) 208 may comprise a data receive module 210, a radar data mapping module 212, an image processing module 214, an association determination module 216 and other module(s) 218.

It would be appreciated that modules being described are only exemplary modules and any other module or sub-module may be included as part of the system 100 or the processing unit 104. These modules too may be merged or divided into super-modules or sub-modules as may be configured.

### Data receive module 210

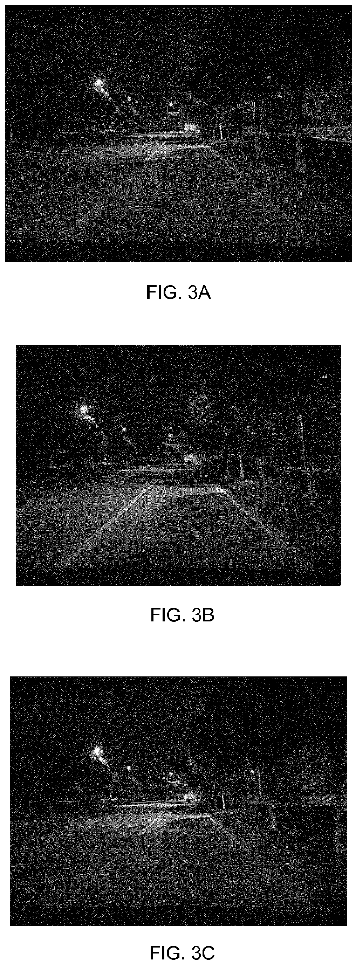

In an aspect, the data receive module 210 receives radar data, pertaining to the target vehicle, that is detected by the radar sensor of the input unit 102. The radar data comprises at least a lateral distance and a longitudinal distance of the target vehicle from the host vehicle. In an embodiment, the radar data may comprise a radar identifier (ID) associated with the target vehicle and correspondingly the lateral distance and the longitudinal distance of the detected target vehicle from the host vehicle. Further, the data receive module 210 also receives an image from the image sensor of the input unit 102, which images field of view of the host vehicle. FIG. 3A illustrates an exemplary image pertaining to field of view of the host vehicle that is received from the image sensor. As illustrated, a target vehicle that is to be detected is located in a far region of the field of view of the host vehicle.

**Radar data mapping module 212**

In an aspect, the radar data mapping module 212 maps the received radar data in the image received from the image sensor to obtain a radar map point in said image.

In an embodiment, the radar data mapping module 212 maps the radar data received by the data receive module 210 in the image by obtaining two dimensional coordinates in the image based on at least the lateral distance and the longitudinal distance of the target vehicle from the host vehicle. FIG. 3B illustrates an image comprising mapped radar data that is indicated as a black spots on the target vehicle.

Those skilled in the art would appreciate that the radar data corresponding to same target vehicle can appear in a close region in the image. Therefore, in an embodiment, the radar data mapping module 212 filters the radar data corresponding to same target vehicle such that a single point is obtained. The single point may be obtained based on an association between plurality of points pertaining to same target vehicle that are obtained using the radar data. FIG. 3C illustrates an image obtained after associating radar data pertaining to the target vehicle that is indicated as a black '+' sign located at bottom of the target vehicle in the image.

In an embodiment, the radar map point is obtained by compensating an offset error pertaining to height of the target vehicle that is determined based on at least the longitudinal distance of the target vehicle from the host vehicle. Those skilled in the art would appreciate that as only two dimensional data that pertains to longitudinal and lateral distances of the target vehicle from the host vehicle is mapped in the image, an offset error of third dimension that is height is generated. Thus, radar map point is located at bottom of the target vehicle. In order to compensate this offset error, it is required to subtract few pixels vertically in the image. However, the number of pixels that are required to be subtracted is not same at all the longitudinal distances. An exemplary equation between the longitudinal distance and the no of pixels that are required to be subtracted in order to compensate the offset error pertaining to height of the vehicle is given by:

$$\text{Offset} = (0.0025 * d^2) - 0.5264d + 33.857 \qquad (1)$$

Where

Offset is the number of pixels that are required to be subtracted in the image to compensate an error pertaining to height of the target vehicle, and
d is the longitudinal distance between the target vehicle and the host vehicle obtained from radar data.

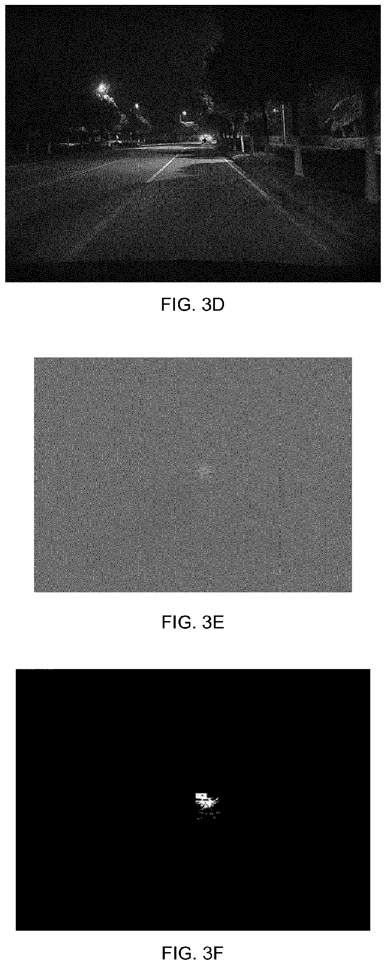

FIG. 3D illustrates an image with proper radar map point obtained by correcting the offset error pertaining to height of the vehicle. The radar map point is represented as a black '+' sign on the target vehicle in the image.

**Image processing module 214**

In an embodiment, the image processing module 214 detects position of the target vehicle in the image by processing the image received from the imaging sensor. Firstly, the image processing module 214 converts the received image in a pre-processed image that is in YUV format. A YUV format, splits colour of an image across Y, U, and V values, and stores brightness (luminance) as the Y value, and colour (chrominance) as U and V values. Thus, the received image that is in any suitable image format is converted into YUV format. For example, if the received image is in RGB format, the received image can be converted into YUV format using following equations:

$$Y = 0.299R + 0.587G + 0.114B$$

$$U = 0.492(B-Y)$$

$$V = 0.877(R-Y)$$

Those skilled in the art would appreciate that during night time only brake light of the target vehicle is visible, if the target vehicle is in far region. As brake light of most vehicles is red, the image processing module 214 extracts a red channel to detect presence of a vehicle. Extraction of red channel is performed by filtering V component from the pre-processed image that is in YUV format. On said extraction a filtered image is obtained.FIG. 3E illustrates a filtered image obtained after extraction of red channel from the received image (as illustrated in FIG. 3A).

Further, for proper extraction of the brake light to detect position of the target vehicle, the image processing module 214 converts the filtered image into a binary image.FIG. 3F illustrates a processed image obtained from conversion of filtered image of FIG. 3E in binary form.

Those skilled in the art would appreciate that as the image processing module 214 process the received image to detect position of the target vehicle in the image in order to confirm the radar map point, in an embodiment, the processing of the received image may be performed locally in an area defined in proximity of the radar map point. In such an embodiment, as whole image is not processed computational load on the processing unit 104 is reduced.

## Association determination module 216

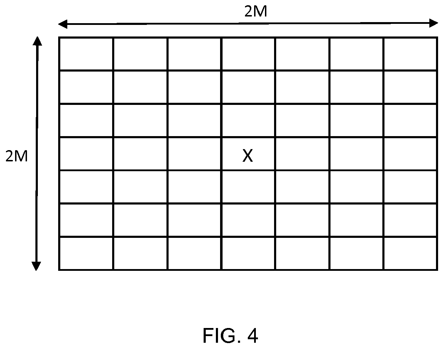

In an embodiment, the association determination module 216 determines an association between the radar map point and detected position of the target vehicle in the image by detecting a search region in the image. Detection of the search region by the association determination module may be explained by using an example. In an example, as illustrated in FIG. 4, suppose radar map point in the image is detected to be 'X' in an image of 2M X 2M pixels. Those skilled in the art would appreciate that searching of pixels pertaining to brake light that is red light may be carried out. However, a fixed search region of M X M pixels may not work out at different longitudinal distances of the target vehicle. According to an embodiment, a search region is detected based on the longitudinal distance of the target vehicle from the host vehicle and may be given by following equation.

$$\text{Search region} = (0.0051 \times d^2) - (0.9411d) + 54.012 \qquad (2)$$

Where
d is the longitudinal distance between the target vehicle and the host vehicle obtained from radar data.

Search region indicates number of pixels in the image that are to be searched in proximity of the radar map point. Thus, the number of pixels may be searched along all the directions over the detected radar map point in the image.

In an embodiment, the association determination module 216 confirms the obtained radar map point as the position of the target vehicle in the image based on computation of a threshold value that is determined using the detected search region. According to an example, the confirmation against radar map point is carried by analysing number of bright pixels around radar map point. The threshold value may be determined based on the search region by using following equation:

$$\text{Threshold} = (2 \times \text{search region})^2 \times 0.05 \qquad (3)$$

Therefore, according to an example, if a search region (M) is 10 pixels, a threshold value may be obtained to be 20 using equation (3).This would mean if 20 bright pixels are identified around the radar map point, the radar map point would be confirmed as pertaining to the target vehicle. As would be clear from equation (3), the threshold value is not static and is completely dynamic and adaptive in nature. Further, those skilled in the art would appreciate that the multiplying factor 0.05 of equation (3) is obtained by conducting numerous experiments.

In an embodiment, when the radar map point is not confirmed as the position of the target vehicle in the image, the association determination module 216 indicates the radar data as a false positive such that said radar data is filtered out and no output is provided to the driver on such indication of radar data being false positive. However, once the radar map point is confirmed as position of the target vehicle, the output unit 106 provides an audio-visual warning to driver of the host vehicle such that suitable measures may be taken by the driver. For example, the driver on said warning may accelerate, decelerate or alter his/her path.

Those skilled in the art would appreciate that embodiments of the present disclosure is not limited to detection of a single target vehicle in an image but if appropriate, the embodiments of the present disclosure may detect and confirm presence of multiple vehicles in a single image received from the image sensor.

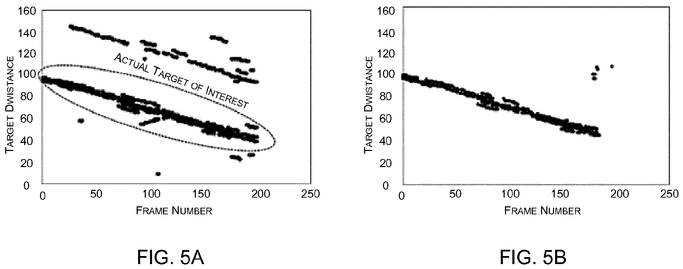

FIG. 5A-B illustrates exemplary experimental results obtained in accordance with an embodiment of the present disclosure.

Those skilled in the art would appreciate that numerous experiments have been conducted to verify results of various embodiments of the present disclosure. FIG. 5A illustrate a plot between radar distance obtained from the radar sensor and no. of images (frame no.) obtained as a result of a conventional technique based on radar data. As can be seen from FIG. 5A lot false detection is present along with actual target of interest. FIG. 5B illustrate a plot between radar distance and no. of images (frame no.) obtained by utilizing embodiments of the present disclosure. As illustrated, after applying image processing on top of the radar detected distances, almost all the false detection has been removed by retaining the actual target of interest. Thus, the embodiments disclosed herein provide better results over existing techniques.

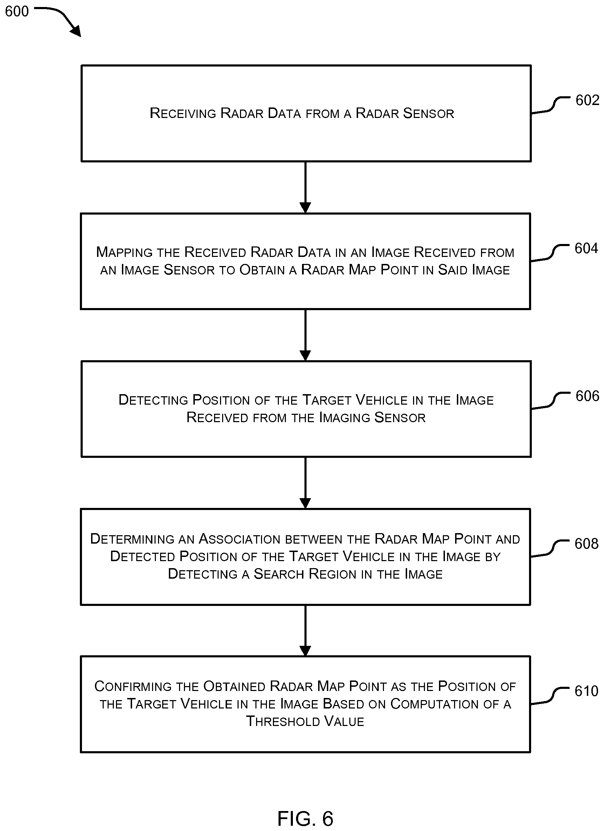

FIG. 6 illustrates an exemplary method for detection of vehicle in night time in accordance with an embodiment of the present disclosure.

In an aspect, the proposed method may be described in general context of computer executable instructions. Generally, computer executable instructions can include routines, programs, objects, components, data structures, procedures, modules, functions, etc., that perform particular functions or implement particular abstract data types. The method can also be practiced in a distributed computing environment where functions are performed by remote processing devices that are linked through a communications network. In a distributed computing environment, computer executable instructions may be located in both local and remote computer storage media, including memory storage devices.

The order in which the method as described is not intended to be construed as a limitation, and any number of the described method blocks may be combined in any order to implement the method or alternate methods. Additionally, individual blocks may be deleted from the method without departing from the spirit and scope of the subject matter described herein. Furthermore, the method may be implemented in any suitable hardware, software, firmware, or combination thereof. However, for ease of explanation, in the embodiments described below, the method may be considered to be implemented in the above described system.

In an aspect, a method for detection of a target vehicle comprises, a step 602 that pertains to receiving radar data from a radar sensor operatively coupled with a host vehicle, said radar sensor operable to detect a target vehicle ahead of the host vehicle, wherein the radar data comprises at least a lateral distance and a longitudinal distance of the target vehicle from the host vehicle. The method further comprises a step 604 that pertains to mapping the received radar data in an image received from an image sensor operatively coupled with the host vehicle, to obtain a radar map point in said image, wherein the radar map point is obtained by compensating an offset error pertaining to height of the target vehicle, said offset error being determined based on at least the longitudinal distance of the target vehicle from the host vehicle. Further, the method comprises a step 606 that pertains to detecting position of the target vehicle, in the image received from the imaging sensor, by processing said received image.

In an embodiment, the method comprises a step 608 that pertains to determining an association between the radar map point and detected position of the target vehicle in the image by detecting a search region in the image, said search region being detected based on at least the longitudinal distance of the target vehicle from the host vehicle and a step 610 that pertains to confirming the obtained radar map point as the position of the target vehicle in the image based on computation of a threshold value, said threshold value being determined using the detected search region.

Those skilled in the art would appreciate that the processing of the received image may be performed locally in an area defined in proximity of the radar map point in order to reduce computational load on the processor.

Further, those skilled in the art would appreciate that conventional techniques for detecting the target vehicle are either completely based on either computer vision approaches or radar based approaches. However, pure vision based approaches fail to detect the presence of target vehicle if the visibility is poor for example, detecting particularly black vehicle at night time condition becomes extremely difficult. On the other hand, radar based approaches generate lot of false detection as finding an actual target vehicle is difficult. The embodiments disclosed herein utilize an integration of both the approaches and thus, are able to detect actual target vehicle by eliminating all the false detections.

As elaborated above, the various embodiments of the present disclosure utilize several unique features. For example, detection of the target vehicle is independent of the vehicle features. Further, the embodiments disclosed herein utilize radar data and transform it into image pertaining to field of view of the host vehicle such that local image processing may be performed around the radar map point area to confirm whether there is a target vehicle or the radar data is false positive. The local image processing is opposed to processing of complete image, which reduces the computational burden on the processor.

As used herein, and unless the context dictates otherwise, the term "coupled to" is intended to include both direct coupling (in which two elements that are coupled to each other or in contact each other) and indirect coupling (in which at least one additional element is located between the two elements). Therefore, the terms "coupled to" and "coupled with" are used synonymously. Within the context of this document terms "coupled to" and "coupled with" are also used euphemistically to mean "communicatively coupled with" over a network, where two or more devices are able to exchange data with each other over the network, possibly via one or more intermediary device.

Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C ....and N, the text should be interpreted as requiring only one element from the group, not A plus N, or B plus N, etc.

While some embodiments of the present disclosure have been illustrated and described, those are completely exemplary in nature. The disclosure is not limited to the embodiments as elaborated herein only and it would be apparent to those skilled in the art that numerous modifications besides those already described are possible without departing from the inventive concepts herein. All such modifications, changes, variations, substitutions, and equivalents are completely within the scope of the present disclosure. The inventive subject matter, therefore, is not to be restricted except in the spirit of the appended claims.

## ADVANTAGES OF THE PRESENT DISCLOSURE

The present disclosure provides a system and method for detection of a vehicle in night time when visibility of target vehicle is very poor.

The present disclosure provides a system and method for detection of a vehicle in night time that has an increased vehicle detection range.

The present disclosure provides a system and method for detection of a vehicle in night time that eliminates false detections determined from radar data.

The present disclosure provides a system and method for detection of a vehicle in night time that has a faster computational time.

The present disclosure provides a system and method for detection of a vehicle in night time that detects vehicles of varied speeds.

The present disclosure provides a system and method that may handle detection and confirmation of multiple vehicles in a single image received from the image sensor.

## Claims

1. A system implemented in a host vehicle for detecting a target vehicle in night time, said system comprising:

    an input unit comprising:

       an image sensor for imaging field of view of the host vehicle;
       a radar sensor operable to detect the target vehicle ahead of the host vehicle;

    a processing unit comprising a processor coupled with a memory, the memory storing instructions executable by the processor to:

       receive radar data, pertaining to the target vehicle, detected by the radar sensor, wherein the radar data comprises at least a lateral distance and a longitudinal distance of the target vehicle from the host vehicle;
       map the received radar data in an image received from the image sensor to obtain a radar map point in said image, wherein the radar map point is obtained by compensating an offset error pertaining to height of the target vehicle, said offset error being determined based on at least the longitudinal distance of the target vehicle from the host vehicle;
       detect position of the target vehicle, in the image received from the imaging sensor, by processing said received image;
       determine an association between the radar map point and detected position of the target vehicle in the image by detecting a search region in the image, said search region being detected based on at least the longitudinal distance of the target vehicle from the host vehicle; and
       confirm the obtained radar map point as the position of the target vehicle in the image based on computation of a threshold value, said threshold value being determined using the detected search region.

2. The system of claim 1, wherein said processing of the image, received from the imaging sensor, comprises:

    converting the received image in a pre-processed image, wherein the pre-processed image is in YUV format;

extracting a red channel, by filtering V component from the pre-processed image, to obtain a filtered image; and converting said filtered image into a binary image to detect position of the target.

3. The system of claim 1, wherein the processor indicates the radar data as a false positive in an event when the radar map point is not confirmed as the position of the target vehicle in the image.

4. The system of claim 1, wherein on mapping the received radar data in the image to obtain the radar map point, the radar data corresponding to the target vehicle is filtered such that a single point is obtained based on an association between a plurality of points pertaining to the target vehicle, said plurality of points being obtained using the radar data.

5. The system of claim 1, wherein the received radar data is mapped in the image by obtaining two-dimensional co-ordinates in said image based on at least the lateral distance and the longitudinal distance of the target vehicle from the host vehicle.

6. The system of claim 1, wherein the processing unit is operatively coupled with an output unit configured to provide an audio-visual warning to a driver of the host vehicle in an event of confirmation of the radar map point as the position of the target vehicle.

7. The system of claim 1, wherein the search region pertains to number of pixels, in the image, to be searched in proximity of the radar map point.

8. The system of claim 1, wherein to confirm the obtained radar map point as the position of the target vehicle in the image, number of bright pixels around the radar map point is analyzed.

9. The system of claim 8, wherein the obtained radar map point is confirmed as the position of the target vehicle in the image when number of bright pixels around the radar map point is greater than the threshold value, said threshold value being completely dynamic and adaptive in nature.

10. A method, carried out according to instructions stored in a computer implemented in a host vehicle, comprising:

receiving radar data from a radar sensor operatively coupled with the host vehicle, said radar sensor operable to detect a target vehicle ahead of the host vehicle, wherein the radar data comprises at least a lateral distance and a longitudinal distance of the target vehicle from the host vehicle;
mapping the received radar data in an image received from an image sensor operatively coupled with the host vehicle, to obtain a radar map point in said image, wherein the radar map point is obtained by compensating an offset error pertaining to height of the target vehicle, said offset error being determined based on at least the longitudinal distance of the target vehicle from the host vehicle;
detecting position of the target vehicle, in the image received from the imaging sensor, by processing said received image;
determining an association between the radar map point and detected position of the target vehicle in the image by detecting a search region in the image, said search region being detected based on at least the longitudinal distance of the target vehicle from the host vehicle; and
confirming the obtained radar map point as the position of the target vehicle in the image based on computation of a threshold value, said threshold value being determined using the detected search region.

11. The method of claim 10, wherein the processing of the received image is performed locally in an area, defined in proximity of the radar map point, to reduce computational load.

100

INPUT UNIT
102

RADAR DATA MAPPING
108

PROCESSING UNIT
104

IMAGE PROCESSING
110

ASSOCIATION DETERMINATION
112

OUTPUT UNIT
106

FIG. 1

PROCESSING UNIT
104

PROCESSOR(S)
202

INTERFACE(S)
204

MEMORY
206

PROCESSING ENGINE(S)
208

DATA RECEIVE MODULE
210

RADAR DATA MAPPING MODULE
212

IMAGE PROCESSING MODULE
214

ASSOCIATION DETERMINATION
MODULE
216

OTHER MODULE(S)
218

DATA
220

FIG. 2

FIG. 3A

FIG. 3B

FIG. 3C

FIG. 3D

FIG. 3E

FIG. 3F

2M

2M

X

FIG. 4

FIG. 5A

FIG. 5B

600

RECEIVING RADAR DATA FROM A RADAR SENSOR — 602

MAPPING THE RECEIVED RADAR DATA IN AN IMAGE RECEIVED FROM AN IMAGE SENSOR TO OBTAIN A RADAR MAP POINT IN SAID IMAGE — 604

DETECTING POSITION OF THE TARGET VEHICLE IN THE IMAGE RECEIVED FROM THE IMAGING SENSOR — 606

DETERMINING AN ASSOCIATION BETWEEN THE RADAR MAP POINT AND DETECTED POSITION OF THE TARGET VEHICLE IN THE IMAGE BY DETECTING A SEARCH REGION IN THE IMAGE — 608

CONFIRMING THE OBTAINED RADAR MAP POINT AS THE POSITION OF THE TARGET VEHICLE IN THE IMAGE BASED ON COMPUTATION OF A THRESHOLD VALUE — 610

FIG. 6

Europäisches
Patentamt
European
Patent Office
Office européen
des brevets

# EUROPEAN SEARCH REPORT

**Application Number**

EP 18 19 0802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/242117 A1 (IZZAT IZZAT H [US] ET AL) 24 August 2017 (2017-08-24) * paragraph [0031] - paragraph [0039]; figures 4A, 4B, 5 * ----- | 1-11 | INV. G01S7/41 G01S13/93 G01S13/86 |
| A | NAGUMO S ET AL: "Extraction of forward vehicles by front-mounted camera using brightness information", PROCEEDINGS / CCECE 2003, CANADIAN CONFERENCE ON ELECTRICAL AND COMPUTER ENGINEERING : TOWARD A CARING AND HUMANE TECHNOLOGY ; MAY 4TH TO 7TH 2003, MONTRÉAL, CANADA, IEEE, NEW YORK, NY, US, vol. 2, 4 May 2003 (2003-05-04), pages 1243-1246, XP010654300, DOI: 10.1109/CCECE.2003.1226124 ISBN: 978-0-7803-7781-3 * sec. 3.2.2 * ----- | 2 | |

**TECHNICAL FIELDS SEARCHED (IPC)**

G01S

The present search report has been drawn up for all claims

| Place of search | Date of completion of the search | Examiner |
|---|---|---|
| Munich | 7 March 2019 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 0802

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2019

| Patent document cited in search report | Publication date | Patent family member(s) | Publication date |
|---|---|---|---|
| US 2017242117 A1 | 24-08-2017 | CN 107103276 A<br>EP 3208635 A1<br>US 2017242117 A1 | 29-08-2017<br>23-08-2017<br>24-08-2017 |

EPO FORM P0459

For more details about this annex : see Official Journal of the European Patent Office, No. 12/82